# EUROPEAN PATENT SPECIFICATION

(11) **EP 1 548 173 B1**
(45) Date of publication and mention of the grant of the patent: **01.07.2009**
(21) Application number: 03425817.8
(22) Date of filing: 23.12.2003
(51) Int. Cl.: D06F 39/00, D06F 58/24

(54) **Domestic washing machine and dryer which can be connected together, corresponding combined installation and corresponding process for washing and drying**
Haushalt-Waschmaschine und Trockner, die miteinander verbunden werden können, entsprechende gemeinsame Installation und entsprechendes Verfahren zum Waschen und Trocknen
Machine à laver domestique et séchoir qui peuvent être réliés l'un à l'autre, installation combinée correspondante et procédé correspondant pour laver et sécher

(43) Date of publication of application: 29.06.2005
(73) Proprietor: Candy S.p.A., 20052 Monza (MI) (IT)
(72) Inventor: Fumagalli, Silvano, 20052 Monza (IT)
(74) Representative: Falcetti, Carlo

(56) References cited:
- EP-A- 0 607 628
- DE-A- 2 556 629
- DE-A- 19 541 189
- DE-A- 19 802 650
- DE-U- 29 809 450
- GB-A- 1 510 528
- PATENT ABSTRACTS OF JAPAN vol. 1995, no. 01, 28 February 1995 (1995-02-28) & JP 06 277398 A (HITACHI LTD), 4 October 1994 (1994-10-04)

## Description

This invention relates to a domestic washing machine designed for connection to a laundry dryer which is slave to the former and the corresponding combined installation and the process carried out by them.

Domestic washing machines which operate independently to wash laundry with a considerable consumption of water, electrical power for heating the water and, in cases where hard water is used, also detergent during the various stages of the washing cycle have been known for a long time.

Drying machines which operate independently and give rise to an appreciable consumption of electrical power and very often also water for the condensation of steam have also been known for a very long time.

In order to partly overcome these disadvantages, and in particular to achieve some saving in the water used, it has been proposed for some time, as for example described in GB 1510528, that a washing machine should be coupled together with a condensation dryer (with a condenser commonly referred to as a spray or mixing condenser) placed above the former and provided with a tank for the accumulation of cold rinsing water, received from the washer, which is subsequently used as condensation water in the dryer, or reused in a subsequent washing cycle, on control of the washing machine.

In case, to ensure an adequate flow of cold water to the condenser, the water present in the accumulator tank may be caused to recirculate several times and, once reached a predetermined temperature, it is discharged in the waste water discharge system.

A similar arrangement for the only reuse in the washing machine of the condensate and of the cooling water used in a condensation dryer is proposed in JP06277398, where there is no provision of any water accumulation tank and the liquid excess is forwarded from the dryer to the waste water discharge system.

In De29809450U it is proposed to couple a washing machine with a dryer provided with a condensate recovery tank, from which the condensate is is transferred to the washing machine and used herein.

The transfer is controlled by the washing machine.

In DE19802650 it is proposed to couple a washing machine with a dryer whose control unit cooperates with the control unit of the washing machine for transferring the condensate from the dryer to the washer.

It is to be noted that in the last two documents the dryer uses a heat exchanger, not a mixing condenser.

Hence no connection of the dryer to the waste water collection system is foreseen.

It has also been proposed, as for example described in EP 463576, that a washing machine should be provided with a rinsing water accumulation tank and a heat exchanger immersed in the tank to cause condensation of the steam present in the hot moist air produced by an open-flow drying machine coupled to the washing machine. Recirculation of the water present in the accumulation tank is not provided for, nor is it possible.

This arrangement gives rise to a saving in water, electrical power and possibly, with the recovery of condensation water, some softening of the recovered water, which is then reused for washing with a reduced consumption of detergent.

Washer/dryer machines provided with a water recovery tank and a spray condenser, which also perform the drying function with a consequent saving of water, electrical power and detergent, are also known, for example from EP 607628.

Again in this case, provision is made for recirculation of the water to ensure recovery of the mixture of condensate and heated condensation water and if necessary, an adequate flow of water to the spray condenser.

All these arrangements have various limitations.

One common limitation comprises the substantial dimensions of the accumulation tank associated with the dryer in one case and with the washing machine in the other two cases.

In order to recover sufficient rinsing water to condense the steam produced by the dryer with a normal wash load (approximately 2.5 kg for a dry wash load of 5 kg) it is in fact necessary to design the tank to have a capacity of not less than 25 litres, preferably at least 30 litres.

This makes either of the items of equipment particularly bulky and prevents them being installed in a nested way in modular structures.

Also, in the arrangement proposed in GB 1510528 it is necessary to install the dryer machine above the washing machine.

Another serious disadvantage lies in the fact that in both the case where used water is recycled for condensation and in the case where a fixed volume of water and an air/water heat exchanger (EP 463576) is used, the efficiency of the exchanger or of the spray condenser gradually decreases as the temperature of the water increases with a consequent reduction in the temperature difference, only partly compensated for, with constant heating power, by a corresponding increase in the temperature of the moist air.

This considerably increases the time required for drying.

A further disadvantage presented by washing machines with a combined washing/drying function is that the washing drum, which is dimensioned for optimum performance of washing and centrifuging operations, does not constitute an effective container for drying operations, which would require a container of larger capacity.

This in general brings about the need or at least the convenience of subdividing a wash load, and carrying out the drying operation on the various factions separately and in succession.

From this point of view the use of different washing and drying machines, with a drum of larger dimensions than that of a washing drum, is preferable.

It is therefore desirable to have a washing machine which, when associated with a drying machine, in addition to reducing the consumption of power, water and detergent, is suitable for possible nested installation, possibly alongside the drying machine, so that the drying operations can be optimised in terms of time and power required.

It is also desirable to have a washing machine which can operate either separately or together with a drying machine without this operating versatility giving rise to any structural complications which have a substantial effect on the cost of the machine.

It is further desirable to have a drying machine which can be operated in association with a washing machine, the drying machine being hydraulically subject to the latter, without requiring any connection to the water mains system and the waste water discharge system.

These results are achieved through a washing machine associated with a drying machine as defined in the claims and operated in accordance with operating programs which are also defined in the claims.

In its essential aspects, the invention comprises the provision of two separate machines, a washing machine and a drying machine, with corresponding washing and drying containers, both provided with a water recovery tank, and hydraulically connected together to fill both tanks with rinsing water used by the washing machine, to exchange the contents of the tanks without mixing using the washing vessel as a buffer or transit tank, the water contained in the tank of the drying machine being used as condensation water in a spray condenser for the drying machine and then recovered in the two tanks for subsequent use in the washing machine.

The features and advantages of the invention will be more clear from the following description of a preferred embodiment and its variants which is provided with reference to the appended drawings in which:
- Figure 1 is a simplified diagrammatical view of a domestic installation comprising a washing machine and a drying machine according to this invention.
- Figure 2 is a simplified diagrammatical view of a preferred embodiment of the installation according to this invention.
- Figure 3 is a diagrammatical view of a variant of the installation in Figure 2 comprising a washing machine and a drying machine of the top-loader type.
- Figure 4 is a qualitative diagram which describes the thermal behaviour of the spray condensation system with recovery of the condensation mixture in the known art.
- Figure 5 is a qualitative diagram which describes the thermal behaviour of the spray condensation system with recovery of the condensation mixture performed by the installation according to this invention.
- Figure 6 is a qualitative diagram which describes the thermal behaviour of the drip condensation system with recovery of the condensation mixture carried out by the installation according to this invention in the case in which there is provision for recycling of the condensation mixture.

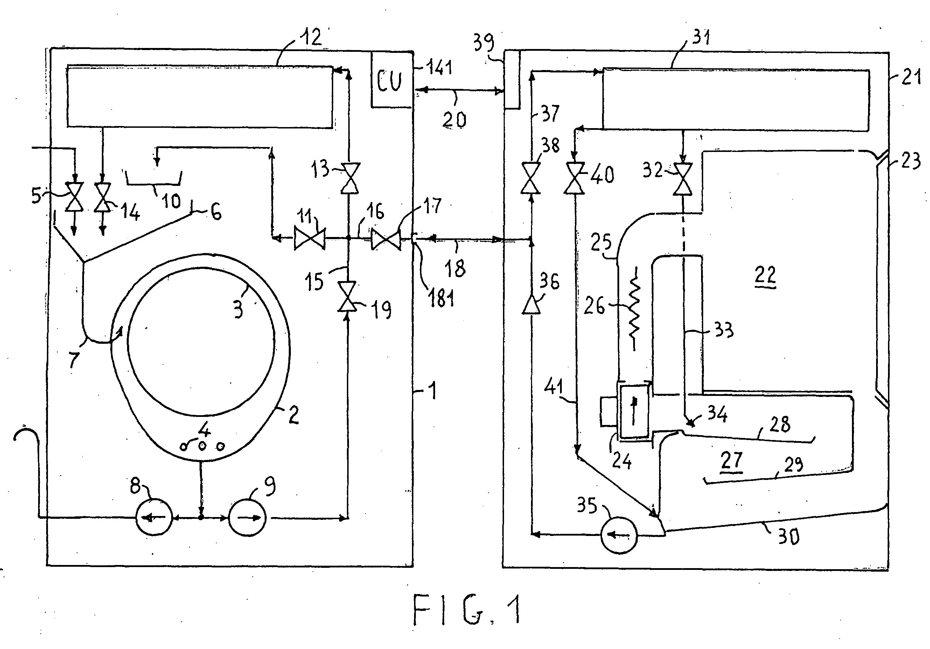

With reference to Figure 1 a domestic washing machine according to this invention comprises a housing 1, preferably but not necessarily of the modular type, having standard dimensions for possible nested installation, in which a washing vessel 2 with a corresponding rotating drum 3 containing the laundry is located.

Heating elements 4 are located in the lower part of vessel 2.

Vessel 2 is fed from the water mains through an electrically-operated valve 5, a small collection tray 6 (and "air break") and a siphon 7.

The washing water present in vessel 2 is discharged to the waste-water collection system via a pump 8, or alternatively is caused to recirculate to a detergent holding vessel 10, by a pump 9, following a path controlled by an electrically-operated valve 11.

Although pumps 8, 9 are shown as being separate, these may be replaced by a single pump and a diversion device, of the type described for example in patent EP 0597508, or by a single pump/filter unit as described in patent EP 0736626.

In housing 1, preferably but not necessarily in the upper part thereof, there is housed a tank 12 for recovery of the rinsing water, preferably but not necessarily having a capacity of 14-15 litres.

In a housing having the standard dimensions of 60 x 50 cm, this tank, which preferably extends horizontally, may have a vertical dimension of the order of 5-6 cm.

The water used to rinse the laundry in the final stage of the washing cycle can therefore be recovered in a known way in tank 12, by suitably operating pump 9, along a path controlled by an electrically-operated valve 13.

It can then be used for a subsequent washing cycle, discharging it into washing vessel 2 through activating an electrically-operated discharge valve 14 which opens into tray 6 (or directly into the washing vessel).

The various stages in the washing cycle and activation of the different electrical and electromechanical components of the machine are controlled by a control unit CU 141 preferably of the electronic microprocessor type for the versatility which it offers.

In addition to these aspects which are already known, the washing machine according to the invention adds the following elements with a minimum of modification:

Downstream from pump 9, in recirculation or recovery conduit 15 there is provided a branch 16, controlled by an electrically-operated valve 17, for hydraulic connection to an external item of equipment comprising a drying machine, through a suitable connecting pipe 18. In Figure 1 branch 16 and connecting pipe 18 have a two-directional function, to convey water to the drying machine or to receive water from the same and convey it selectively to tank 12 or washing vessel 2, after first passing through small detergent-holding tray 10.

In order to permit or block a direct flow of liquid from the exterior into washing vessel 2, (through inactive pump 9) an electrically-operated control valve 19 is provided in the embodiment illustrated in Figure 1.

If the function required from electrically-operated valve 19 is only to prevent a backflow into recirculation conduit 15, electrically-operated valve 19 may be replaced by a simple mechanical non-return valve.

Finally, a logical connection 20 is provided between control unit 141 and the external drying machine to directly control the latter using the same control unit as for the washing machine, and to receive signals generated by suitable (temperature and/or humidity) sensors from the drying machine.

Logical connection 20 may comprise an optical fibre or an electrical cable.

The drying machine in Figure 1 comprises a housing 21, preferably but not necessarily of the modular type, having standardised dimensions for possible nested installation, in which there is housed a drying chamber 22 in which the laundry is placed through an openable loading door 23.

Within housing 21 there is formed a closed circuit for the flow of air through suitable ducts which comprises in the direction of flow a centrifugal fan 24, a heating chamber 25 with electrical heating elements 26, drying chamber 22 and a spray condenser 27, preferably of the counter-current type, essentially comprising a series of trays, 28, 29, 30, forming a labyrinth returning the air circuit to fan 24.

In the upper part of the housing there is a water accumulation tank 31, which also preferably has a capacity of 14-15 litres.

An electrically-operated valve 32 is used to discharge water from tank 31 through a duct 33 and spray nozzles 34 into spray condenser 27, where it is successively collected by gravity into various trays 28, 29, 30.

To these already known aspects the dryer according to the invention adds the following elements with a minimum of modification:
- a pump 35, fed by liquid collected in lower tray 30 for delivering the liquid collected by tray 30 to the washing machine via a non-return valve 36 and connecting pipe 18.
- a hydraulic connection 37, controlled by an electrically-operated valve 38, to convey a flow of water originating from the washing machine (via pipe 18 or from pump 35) to accumulation tank 31.
- a conduit 41 controlled by an electrically-operated valve 40 for rapid discharge of tank 31 into tray 30 of condenser 27.
- a logical connection 39 to receive command signals via corresponding logical connection 20 of the washing machine and to send measurement and alarm signals to control unit 141.

An electrical connection, not illustrated, may be associated with logical connection 39 to receive the electrical power required for operation from the washing machine.

As an alternative, this may be provided directly from the mains.

It will be noted therefore that the only hydraulic connection with the exterior comprises pipe 18, and no other connection is provided for operation of the dryer, either to the water mains or to the waste-water collection system, which makes installation extremely simple and convenient without the need to make special provision for infrastructure.

In particular, in order to ease connection of the two machines, pipe 18, which is of the flexible type without any particular strength requirements, at a hydraulic pressure equivalent to the mains pressure, is conveniently provided with a quick-fit connection 181 to the washing machine and if appropriate, a similar quick-fit connection to the dryer.

We will now examine in sequence the functioning of the washing machine and dryer in Figure 1, starting from an initial condition in which the two tanks 12 and 31 are empty.

The conventional washing cycle, which is in itself known, comprises a pre-wash stage, with cold or hot water as selected by the user. Operation of electrically-operated valve 5 makes it possible to load vessel 2 with the water required, typically 14 litres, which the activation of pump 9, electrically-operated valve 11 and electrically-operated valve 19 (if present) causes to circulate to take detergent from the appropriate compartment in tray 10. Once the pre-wash has been performed, the water in vessel 2 is discharged by operating pump 8.

The pre-wash stage is followed by a similar washing stage, carried out with water taken from the mains which is then discharged.

The washing stage is followed by a first rinsing stage with water taken from the mains which is then discharged as it is dirty.

The first rinse is followed by a second rinse, again with water taken from the mains (typically 13 - 14 litres).

In this case, the relatively clean and cold (typically 10°C - 15°C) rinsing water is discharged to one of the tanks 12 and 31, for example tank 31, instead of being discharged to the drains, by activating pump 9 and electrically-operated valves 17 and 38 (and 19 if present).

Note that discharge of the rinsing water to tank 31 is "direct" e.g. occurs with no transit in tank 12.

The second rinse is generally followed by a third rinse, accompanied in the final stage by a centrifuging operation.

Here again the cold and relatively clean rinsing water is recovered into the other of the two tanks 12 and 31, for example tank 12, by activating pump 9 and electrically-operated valve 13 (and 19 if present).

At this point the wash cycle comes to an end and the washed laundry can be removed from drum 3 and placed in drum 22 in order to be dried.

The residual water content of the laundry placed in drum 22 is of the order of 2 - 2.5 kg (for the standard dry wash load of 5 kg), depending upon the efficiency of the centrifuging operation which, as is well known, may be carried out at different speeds.

In order to dry the laundry, the drying machine operates as follows, in combination with the washing machine.

In the initial stage, operation of fan 24 and heating element 26 generates a flow of hot air in the air circuit which warms up the laundry, the walls of the circuit and causes partial evaporation of water with a formation of air saturated with water vapour, indicatively at a temperature of 60°C-70°C).

With a heating power of 2.0 kW the length of this stage is indicatively 5 minutes.

In the course of this stage, electrically-operated valve 14 in the washing machine is activated and the rinsing water present in tank 12 is discharged into washing vessel 2, so that tank 12 empties.

At the end of this initial stage electrically-operated valve 32 in the dryer is activated and returns the cold water present in tank 31 to spray condenser 27 at a controlled rate of flow, for example 0.5 litres/minute.

The flow of moist, hot air to condenser 27 flows against the condensation plates/trays cooled by the incoming water, indicatively at a temperature of 10°C - 15°C, in counter-current flow which causes the air to cool, partial condensation of the vapour and corresponding heating up of the cooling water to a temperature of the order of 50°C.

The mixture of condensation water and cooling water collected in tray 30 is directly delivered, as it forms to tank 12 of the washing machine by pump 35, via conduit 18 and electrically-operated valves 17 and 13.

The length of this first drying stage is indicatively 30 minutes, essentially depending upon the heating power used (2 kW).

It should be noted that partial mixing of the mixture entering tank 12 with the liquid contained therein is accepted, and at the start of this first stage of drying, may overlap in time with the initial stage.

At the end of this first drying stage, when tank 31 is completely empty, pump 35 has stopped and pump 9 in the washing machine is activated with simultaneous activation of electrically-operated valves 17 and 19 (if present) and electrically-operated valve 38 in the dryer.

Over a period of a few minutes (1 - 2 at the most) the cold rinsing water present in vessel 2 is transferred to tank 31 and the drying operation can proceed (heating element 26 and electrically-operated valve 32 are still activated).

During the second drying stage, reactivation of pump 35 and electrically-operated valves 11 and 17 (in the washing machine) make it possible to directly recover the hot mixture of condensate water and cooling water in vessel 2 as it forms, without transit through tank 12, which is already full.

Alternatively, activation of electrically-operated valve 13 instead of 11 and activation of electrically-operated valve 14 makes it possible to recover the hot mixture in tank 12 as it forms, discharging the hot mixture already present in tank 12 into wash vessel 2.

Clearly, electrically-operated valve 14 is closed once vessel 2 has been filled to a pre-determined level.

The length of this second stage is also indicatively 30 minutes.

At this point, the drying operation is complete and the mixture of hot softened water previously collected in vessel 2 can be recovered into tank 31 of the dryer by activating pump 9; for subsequent re-use or, if required, for a further third drying stage which will inevitably be performed with a slightly lower efficiency in the water condenser because, despite being cooled to some extent in vessel 2, the cooling water will nevertheless have a higher temperature than the initial temperature.

During this further drying stage, which may last a few minutes, the mixture collected in tray 30 may be caused to recirculate from pump 35 through electrically-operated valve 38 and be finally wholly recovered in tank 31 for subsequent re-use.

For example, once the drying operations are complete a new wash cycle can be initiated using the hot and partially decalcified water contained in tank 12 for the pre-washing operation and the hot and partially decalcified water present in tank 31 for the wash, with a substantial saving of water, detergent and electrical power.

It should be noted that activation of the wash cycle may also take place before the drying operations have been completed: at the end of the first drying stage (or the second, if a third drying stage is intended), tank 12 contains hot decalcified water while the cold water previously present in tank 12 is transferred to tank 31.

With the water present in tank 12 a pre-wash may be performed at the same time as the second stage of drying is carried out, in the course of which the water used for drying may be recovered in tank 12 without interfering with the pre-wash operation.

It should be noted that simultaneous operation of the washing machine for pre-washing and of the dryer for drying does not result in any overloads for the electrical system because the pre-wash with recovered hot water does not require activation of heating elements 4 at the same time as heating elements 26 in the dryer.

It is also interesting to note that if it is desired to dry an already available wet wash load it is still possible to start a drying cycle when a previously started washing cycle is already in progress.

Control unit 141 controls and synchronises the various stages of the two operations in such a way as to avoid conflicts and incompatibilities, such as for example the simultaneous activation of heating elements 4 and 26.

In particular the initial stage of pre-heating the load in the drying machine may be activated in the course of the first or second rinse, and at the end of the second rinse the first stage of drying with recovery of cooling water (and condensate) in tank 12 can be started up once the rinsing water has been collected in tank 31.

The second drying stage is in turn subject to opening of the washing machine in order to remove the washed load and its closure again in order to permit subsequent recovery of water in the vessel without risk.

Alternatively, if a third rinse is not necessary, the laundry can be removed at the end of the second rinse. In this case, the water required to complete the drying (second stage) can be drawn from the mains and transferred to the dryer via the washing machine.

It is therefore clear that the washing machine can also operate in the absence of the drying machine and in this condition, rinsing water (the second or third) can still be recovered for subsequent use.

In addition to this versatility in use in the case of combined operation there is the technical advantage that all of the water necessary for condensation of the water vapour and all the heat content of the same is recovered at the same time, ensuring maximum efficiency of the condenser, which can operate at a constant incoming water temperature equal to the temperature of the water in the mains (10°- 15°).

With some restriction imposed by the need to heat and cool a larger volume of recirculated carrying air, this makes it possible to limit the temperature to which the laundry is heated and the temperature of the moist air recirculating in the drying machine, with consequent reduced dispersion and greater efficiency in the drying process.

For equal heating power the time for the drying cycle is reduced significantly, up to almost 20% in comparison with condensation drying machines in which recovery of the cooling water in a single tank necessarily results in a progressive increase in the temperature of the water used for condensation.

In this respect it should be noted that the same advantage is also present, although limited to some extent, in the case where a higher flow that that indicated is necessary to feed the spray condensers, and some direct recirculation from tray 30 to tank 31 is therefore necessary.

In fact breaking down the drying cycle into at least two stages performed with cooling water which is initially at the temperature of the mains is more efficient from the thermodynamic point of view that a single cycle performed with water at a gradually increasing temperature.

The installation illustrated in Figure 1 is susceptible to substantial variants and further improvements.

It is obvious that electrically-operated valves 11, 13, 17 and possibly 19 may be replaced by multiple-way valves or a single rotating distributor which selects the desired path under the control of CU 141.

Similarly, the two electrically-operated valves 32 and 40 may be replaced by a single two-way electrically-operated valve.

These arrangements, although more complex, may prove to be advantageous because they make it possible to reduce the head loss due to the presence of several successive valves in the different flow routes to a minimum.

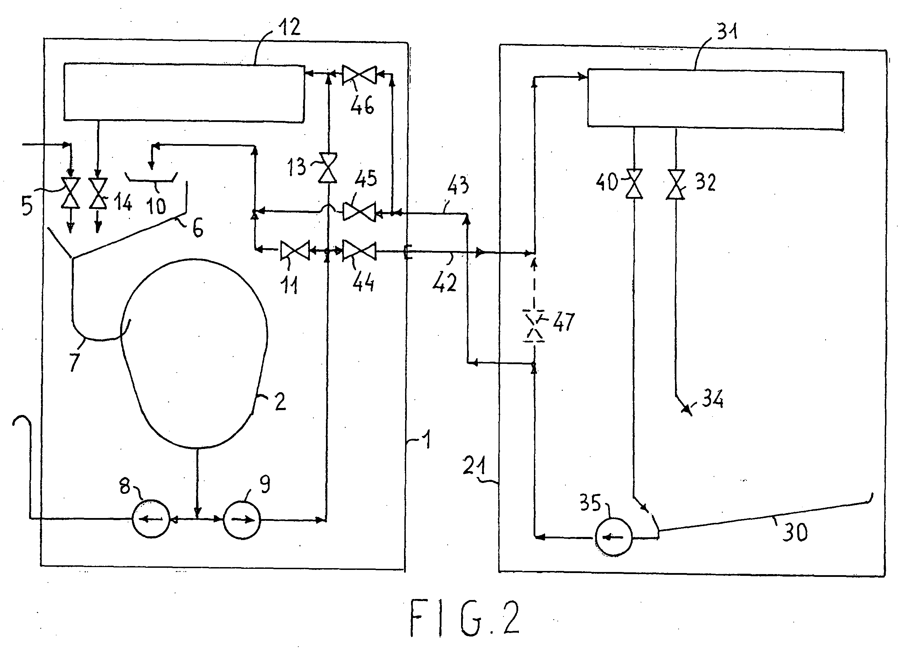

More advantageously the same result may be obtained using the preferred embodiment illustrated in Figure 2 which in addition to reducing head loss in the various flow paths to a minimum, makes it possible for two flows in opposite directions between the washing machine and the dryer to overlap in time.

In Figure 2, only the hydraulic circuits are shown for the sake of simplicity as the other parts of the two items of equipment remain unchanged. Functional elements equivalent to those in Figure 1 are identified using the same reference numbers.

Essentially the embodiment in Figure 2 differs from that in Figure 1 in that the hydraulic connection conduit between the two items of equipment is replaced by two conduits 42 and 43, one (42) to transfer the rinsing water, which is generally cold, to the dryer and the other (43) to transfer the mixture of condensate water and condensing water, which is hot, to the washing machine.

The two conduits, which are appropriately lagged, may be enclosed within a protective sheath and connected to the washing machine (and possibly also to the dryer) through a single two-way quick-fit connection, for example of the type which only opens a flow-stopping device once it has been inserted.

The outgoing flow from the washing machine via conduit 42 is controlled by an electrically-operated valve 44 which may be located either in the washing machine (as illustrated) or in the dryer, and feeds tank 31.

The incoming flow to the washing machine via conduit 43 is selectively controlled by two electrically-operated valves, 45 and 46, in order to then be sent to vessel 2 (via tray 10) and tank 12 respectively.

An electrically-operated valve 47 may be provided in the dryer in order to permit possible recirculation of the mixture of condensate water and cooling water drawn from vessel 30 to tank 31.

Operation is wholly similar to that previously described with the single difference that in this case, in the course of the first drying stage, with progressive emptying of tank 31 it is possible to make up its contents through activating pump 9 and the dead time between the first and second drying stages is eliminated.

Furthermore, if it is necessary to recirculate the cooling water, which has already been heated, it is possible to provide a recirculation path which passes through vessel 2 and, taking advantage of the thermal capacity of the same and the greater thermal dispersion available, makes it possible to cool the water used for condensation to some extent.

Figure 2 illustrates a preferred embodiment but it is clear that many variants may be applied to it.

For example, both in the arrangement in Figure 2 and in that Figure 1, electrically-operated valve 14 may be eliminated and tank 12 may be discharged into vessel 2 through activated electrically-operated valve 13, conduit 15 and pump 9, which is still inactivated.

In this case, although it is not possible to recirculate flow between tank 12 and tank 31 through vessel 2 previously mentioned, the same cooling effect can be achieved by providing an air/water heat exchanger with an open air flow generated by a fan which draws cool air from the environment in tank 31 of the dryer.

Furthermore, Figure 1 and Figure 2 refer to front-loading washing machines and dryers in which the recovery tanks can be housed in the upper part of the corresponding housings and the liquid contained therein can be discharged by gravity into washing vessel 2 and condenser 27 respectively. It is then obvious that if the drying machine is designed for installation on top of the washing machine, pump 35 may be superfluous, and transfer of the liquid collected in tray 30 to tank 12 or vessel 2 can also be effected by gravity.

Only in the situation illustrated in Figure 1 is pump 35 essential for recirculating liquid from vessel 30 to tank 31.

In the arrangement in Figure 2 recirculation, if required, can instead be assisted by pump 9.

These considerations suggest that the invention may also be applied in the case of top-loading washing machines and dryers.

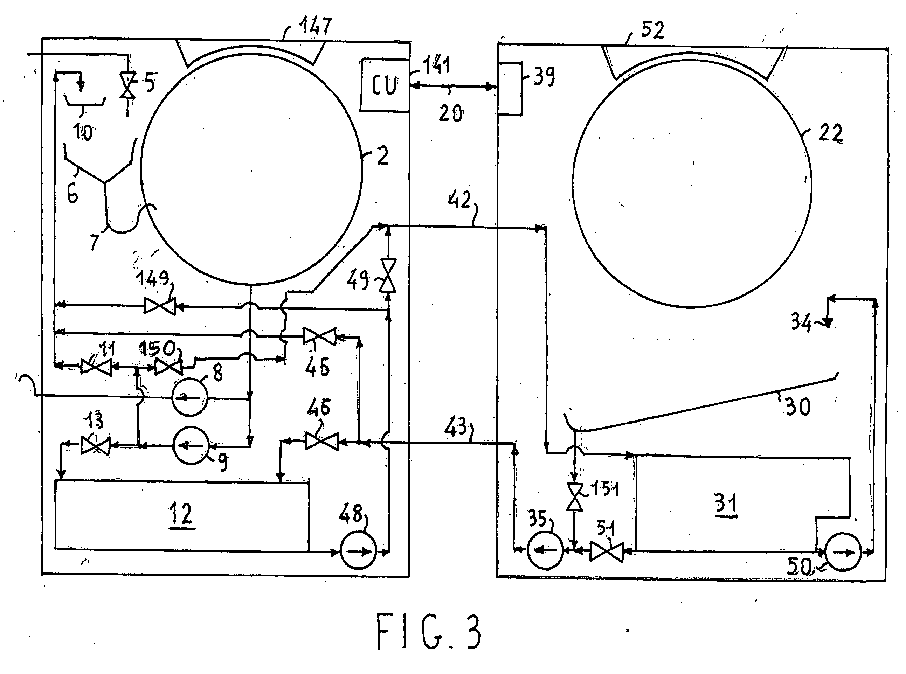

One example of a possible embodiment of a combined top-loading washing machine and dryer system according to the invention is illustrated in Figure 3.

In this case again, only the hydraulic circuit is shown for clarity and components which are functionally equivalent to those in the preceding figures are identified using the same reference numbers.

In Figure 3, tank 12 of the washing machine is placed below washing vessel 2 in order to permit top loading, through a loading door 147, which is illustrated diagrammatically.

Where it is possible for the liquid present in vessel 2 to be discharged directly into tank 12 by gravity, it is preferable to use pump 9 exactly as in the situation in Figure 2 in order to render the process faster.

In order to transfer liquid from tank 12 to tank 31 of the drying machine or to the washing vessel, it is therefore necessary to provide a pump 48.

Two electrically-operated valves 49 and 149 (or an equivalent diverting device) selectively control the delivery of flow from pump 48 to the drying machine or to the washing vessel.

A possible flow route controlled by an electrically-operated valve 150, which places the output from pump 9 in connection with conduit 42, permits direct transfer of the liquid present in vessel 2 to tank 31 of the drying machine (essentially to allow the last rinsing operation and the first drying operation to overlap in time).

Similarly, in the drying machine, in addition to pump 35 which directly transfers the mixture of condensate water and cooling water collected from tray 30 to the washing machine via conduit 43 providing connection between the two machines, a pump 50 having a reduced output which draws up the water present in tank 31 and delivers it to spray nozzles 34 of the condenser may conveniently be provided. An electrically-operated valve (51), which is functionally equivalent to valve 40 in Figure 2, connects the input of pump 35 to tank 31 in order to permit transfer of liquid from tank 31 to the washing machine.

An electrically-operated valve 151, connected between the discharge from tray 30 and the inlet to pump 35 may prevent the pump from sucking without head when electrically-operated valve 51 is activated.

The drying machine is also provided with a top-loading door 52, which is illustrated diagrammatically.

If pump 35 is inactive and the two electrically-operated valves 51, 151 are activated, it is possible to recirculate cooling and condensation water into tank 31 by activating electrically-operated valve 51.

Many other variants are possible, and a description of them is superfluous.

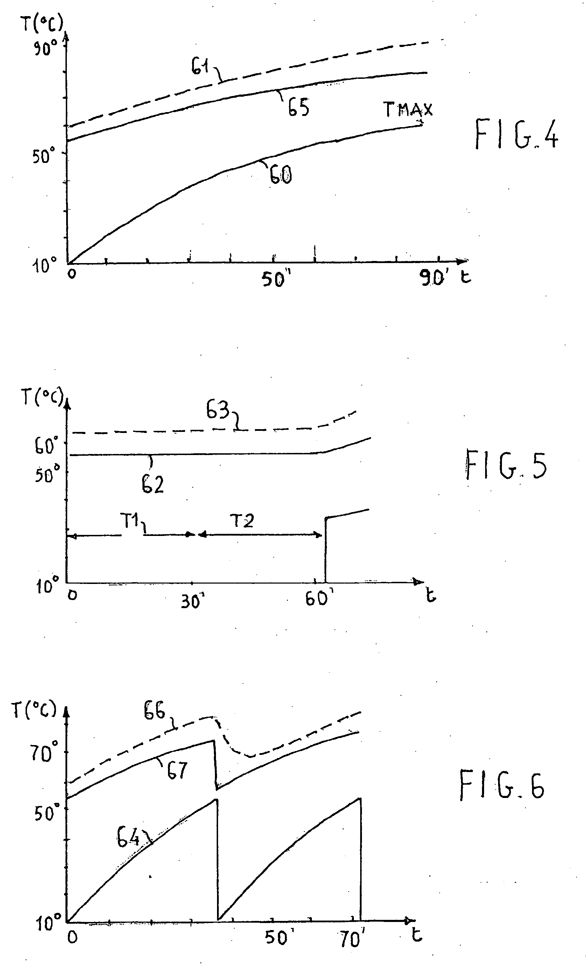

It is instead more important to point out the substantial feature of the invention with reference to the time diagrams in Figures 4, 5 and 6.

Figure 4 relates to a washer/dryer machine or combined washer/dryer installation of the conventional type in which there is a single accumulation tank which contains cooling water fed to a spray condenser as, for example, disclosed by GB 1510528 (in Figure 7) and EP 607628 (or also cooling water from an air/water exchanger as disclosed by EP 463576).

The purpose of this arrangement is to recover the heat of condensation by recirculating the cooling water in the same tank, in addition to recovering the cooling and condensation water.

It is obvious that the cooling water in the tank, which is initially at a temperature of the order of 10°C, will gradually become heated to a temperature of TMAX, for example of the order of 60°C through mixing with the recirculated water.

The water temperature is illustrated in diagram 60.

As a consequence, the efficiency of the exchanger or condenser is gradually reduced.

Under conditions of constant heating power, the temperature of the moist air (and its saturated vapour content), the temperature of the laundry and the drying chamber must therefore correspondingly increase, which increases the heat content and also increases heat loss to the exterior.

Diagram 61 qualitatively illustrates the temperature of the wash load and diagram 65 qualitatively illustrates the temperature of the water leaving the condenser.

The combined effect of these factors results in a time of not less than 80 - 90 minutes for the drying process in a state of the art system for a standard load of 5 kg of laundry (dry weight).

In addition to this, the greater heat content of the laundry and the parts of the system other than the recovered water and the corresponding tank is wasted.

Figure 5 illustrates the operation of the system according to this invention by comparison.

The cooling water present in tank 31 of the dryer, which has a temperature of the order of 10°C, is recovered in tank 12 of the washing machine once it has been delivered to the condenser instead of being caused to recirculate.

The water present in tank 31 therefore maintains its temperature of 10°C unchanged throughout the duration (T1) of the first drying stage, indicatively of 30 minutes, in which the condensation efficiency remains constant and optimal without increases in the temperature of the moist air and the load.

In Figure 5 diagram 62 shows that the temperature of the water feeding the condenser is constant and diagram 63 shows the temperature of the wash load (indicatively only 65° - 70°C).

At the end of this first stage, the cold water present in the vessel of the washing machine, which is not mixed with the hot water recovered in tank 12, again fills the tank of the dryer and makes it possible to carry out a second stage of drying of length T2 (indicatively 30 minutes) under the same conditions of temperature and maximum efficiency as before.

Through this simple arrangement, the drying process is carried out in a shorter time and with an energy saving which can even amount to 20%.

If, as in conventional machines, a further short stage is necessary in order to obtain more thorough drying, the water used in the first stage, which inevitably undergoes some cooling (indicatively it may have a temperature of 30°C - 40°C) in its passage through the three different cold tanks (tank 12, vessel 2 and tank 31) may be reused to perform this stage in the course of which there is only a slight increase in the temperature of the load.

To a large extent these advantages are also obtained in the case where in the course of the various stages the cooling water is caused to recirculate from the condenser to the tank.

The behaviour of the system is illustrated qualitatively in Figure 6.

In the course of the first stage T1, the temperature of the cooling water in tank 31 (diagram 64) rises up to a maximum value (indicatively 55°C - 60°C) through the recirculation effect and the temperature of the load (diagram 66) and the temperature of the water leaving the condenser (diagram 67) increases correspondingly.

However, with the start of the second stage, which takes place with replacement of the hot water present in tank 31 by cold water originating from tank 12 (and possibly via the washing vessel) the condenser again operates under conditions of maximum efficiency and the temperature of the load falls and then rises up to a value which is decisively lower than that which it would have had in a conventional recovery system.

Specifically, again in this case, the drying time and the power required are reduced (indicatively by 10 - 15%).

## Claims

1. Washing machine (1), designed to be connectable to an external drying machine (21), said washing machine comprising:
- a washing vessel (2) and a first tank (12) for the recovery of rinsing water,
- first means (9, 13, 14, 19, 48, 149) for transferring liquid present in said vessel (2) to said first tank (12) and vice versa,
- second means (9, 13, 17, 19 ,35, 44, 45, 46, 48, 49, 150) for transferring liquid from said washing machine (1) to said external drying machine (21) and vice versa
- a control unit (141) to control said first means (9, 13, 14, 19, 48, 149), said second means (9, 13, 17, 19, 35, 44, 45, 46, 48, 49, 150) and said external drying machine (21),
**characterized in that** said second means comprises at least one of the following:
- third means ( 9, 19, 17, 44, 150 ) for the direct transfer of liquid from said vessel (2) to said external drying machine (21) without transit through said first tank (12), and/or
- fourth means (11, 17, 45) for the direct transfer of liquid from said external drying machine (21) to said vessel (2), without transit through said first tank.

2. Washing machine (1) according to claim 1 comprising two separate connections for the outlet and inlet of liquid to and from said drying machine (21) respectively.

3. Washing machine according to claim 2 in which said connections are of the type for connection to hydraulic conduit (42, 43) terminating in a quick-fit plug connector.

4. Washing machine according to any one of the preceding claims in which said first tank (12) is located beneath said vessel (2) and said machine comprises a top loading door (147).

5. Drying machine (21) designed to be connectable to a washing machine (1) and comprising a drying chamber (22), a tank (31) for the accumulation of cooling water, a spray condenser (27) fed from said tank (31), a tray (30) for collection of the mixture of condensation water and condensate, a water inlet (18, 42) to receive water from said washing machine (1) for accumulation in said tank (31), and means (39) to receive control signals from said washing machine (1),
**characterized in that** it further comprises:
- means (35, 18, 43) comprising a first pump (35) controlled by said control signals and a water outlet (18,43) to directly transfer the mixture collected in said collection tray (30) to the washing machine (1), without transit through said tank (31), said water inlet (18, 42) and outlet (18,43) being the only hydraulic connections to the exterior of said drying machine.

6. Drying machine according to claim 5 comprising two separate hydraulic conduits (42, 43) present within a single protective sheath and thermally insulated from each other, respectively for the outlet and inlet of liquid to and from said washing machine.

7. Drying machine according to claim 5 or claim 6 in which said machine is of a top loading type and said accumulation tank (31) is located beneath said drying chamber (22) and said spray condenser (27) and said machine further comprises:
- a second pump (50) delivering cooling water from said tank (31) to said spray condenser (27) and;
- means (51, 151) controlled by said control signals to selectively connect the inlet of said first pump (35) to said collection tray (30) or to an outlet from said tank (31).

8. Domestic laundry washing/drying system comprising an automatic washing machine (1) and a drying machine (21), said washing machine comprising a washing vessel (2) and a first tank (12),
said drying machine comprising a drying chamber (22), a second tank (31) and a spray condenser (27) fed with condensation water from said second tank (31) and having a tray (30) for collection of the mixture of condensation water and condensate,
said system comprising further
- first means (9, 19, 13, 17, 38, 44, 150, 48, 49) for transferring water from said vessel (2) to said first (12) and second (31) tank, possibly through said first tank (12),
- second means (35, 16, 13, 46, 11, 45) for recovering the mixture of condensation water and condensate, collected by said tray, (30) in said first (12) tank, possibly through said vessel (2) and
- control means (141) of said first and second means adapted to perform the following process steps of said system:
- accumulate rinsing water used in said washing machine in said first and second tank,
- exchange the contents of said tanks without mixing using the washing vessel as a buffer tank,
- controlling use of the water present in said second tank (31) as a coolant in said spray condenser (27) in the course of a first drying stage,
- controlling use of the water present in said first tank (12), once transferred to said second tank (31), as a coolant in said spray condenser (27) in the course of a second drying stage,
- controlling recovery of the water used in the drying stages, mixed with condensate water, in said tanks (12,31) for subsequent further use.

9. Method for washing and drying carried out using two separate machines, a washing machine (1) and a drying machine (21) respectively, connected together, the washing machine being provided with a washing vessel (2) and a first accumulation tank (12), the drying machine being provided with a second accumulation tank (31) and a spray condenser (27),
the method comprising the following stages
- recovery of rinsing water in said first (12) and second tank (31),
- feeding the spray condenser (27) with water gradually drawn from the second tank (31) and used as condensation water, to effect a first drying stage, and transferring the mixture of condensation water and condensate, as it forms, to the washing vessel (2) or, following transfer in the washing vessel (2) of the water initially present in the first tank (12), to the first tank (12),
- transfer of the water initially present in said first tank (12) and in case transferred to said vessel (2) to the second tank (31),
- feeding the spray condenser (27) with water gradually drawn from the second tank (31) and used as condensation water, to effect a second drying stage, and transferring the mixture of condensation water and condensate, as it forms, to either said washing vessel (2) or said first tank (12),
- transfer of the water present in the washing vessel (2) to the second tank (31),
- the water recovered in said tanks (12,31) being available for subsequent use as washing and/or pre-washing water.

10. Method according to claim 9 in which the first stage of recovering the rinsing water at least partly overlaps said first drying stage in time.

11. Method according to claim 9 in which said second stage of drying at least partly overlaps in time a pre-washing or washing operation.

## Patentansprüche

1. Waschmaschine (1), die ausgebildet ist, dass sie mit einer externen Trockenmaschine (21) verbindbar ist, wobei die Waschmaschine umfasst:
- einen Waschbehälter (2) und einen ersten Tank (12) für die Rückgewinnung von Spülwasser,
- eine erste Einrichtung (9, 13, 14, 19, 48, 149) zum Transportieren von Flüssigkeit, welche im Behälter (2) vorhanden ist, zum ersten Tank (12) und umgekehrt,
- eine zweite Einrichtung (9, 13, 17, 19, 35, 44, 45, 46, 48, 49, 150) zum Transportieren von Flüssigkeit von der Waschmaschine (1) zur externen Trockenmaschine (21) und umgekehrt
- eine Steuereinheit (141), um die erste Einrichtung (9, 13, 14, 19, 48, 149), die zweite Einrichtung (9, 13, 17, 19, 35, 44, 45, 46, 48, 49, 150) und die externe Trockenmaschine (21) zu steuern,
**dadurch gekennzeichnet, dass** die zweite Einrichtung zumindest eines von dem folgenden umfasst:
- eine dritte Einrichtung (9, 19, 17, 44, 150) zur unmittelbaren Übertragung von Flüssigkeit vom Behälter (2) zur externen Trockenmaschine (21) ohne Transport durch den ersten Tank (12), und/oder
- eine vierte Einrichtung (11, 17, 45) zur unmittelbaren Übertragung von Flüssigkeit von der externen Trockenmaschine (21) zum Behälter (2) ohne Transport durch den ersten Tank.

2. Waschmaschine (1) nach Anspruch 1, welche zwei separate Verbindungen für den Auslass bzw. Einlass von Flüssigkeit zu und von der Trockenmaschine (21) umfasst.

3. Waschmaschine (1) nach Anspruch 2, wobei die Verbindungen derart sind, um eine Verbindung mit einer hydraulischen Leitung (42, 43) herzustellen, welche in einem Schnell-Steck-Verbinder enden.

4. Waschmaschine (1) nach einem der vorhergehenden Ansprüche, wobei der erste Tank (12) unterhalb des Behälters (2) angeordnet ist und die Maschine eine Kopfladetür (147) umfasst.

5. Trockenmaschine (21), die ausgebildet ist, dass sie mit einer Waschmaschine
(1) verbindbar ist, und welche eine Trockenkammer (22), einen Tank (31) zum Sammeln von Kühlwasser, einen Sprüh-Kondensator (27), der vom Tank (31) versorgt wird, ein Tablett (30), um die Mischung aus Kondensationswasser und Kondensat zu sammeln, einen Wassereinlass (18, 42), um Wasser von der Waschmaschine (1) aufzunehmen, um dieses in dem Tank (31) zu sammeln, und eine Einrichtung (39), um Steuersignale von der Waschmaschine (1) zu empfangen, umfasst,
**dadurch gekennzeichnet, dass** sie außerdem umfasst:
- eine Einrichtung (35, 18, 43), welche eine erste Pumpe (35) umfasst, welche durch die Steuersignale gesteuert wird, und einen Wasserauslass (18, 43), um die Mischung, welche in dem Sammeltablett (30) gesammelt ist, unmittelbar zur Waschmaschine (1) ohne Transport durch den Tank (31) zu transportieren, wobei der Wassereinlass (18, 42) und der Wasserauslass (18, 43) die einzigen hydraulischen Verbindungen mit dem Außenraum der Trockenmaschine sind.

6. Trockenmaschine nach Anspruch 5, welche zwei separate hydraulische Leitungen (42, 43) umfasst, welche in einer einzigen Hülle vorhanden sind und welche thermisch voneinander für den Flüssigkeitsauslass bzw. den -einlass zu und von der Waschmaschine isoliert sind.

7. Trockenmaschine nach Anspruch 5 oder 6, wobei die Maschine ein Kopflader ist und der Sammeltank (31) unter der Trockenkammer (22) und dem Sprüh-Kondensator (24) angeordnet ist und die Maschine außerdem umfasst:
- eine zweite Pumpe (50), welche Kühlwasser vom Tank (31) zum Sprüh-Kondensator (27) liefert, und;
- eine Einrichtung (51, 151), welche durch die Steuersignale gesteuert wird, um selektiv den Einlass der ersten Pumpe (35) mit dem Sammeltablett (30) oder mit einem Auslass vom Tank (31) zu verbinden.

8. Haushaltswäschewasch-/Trockensystem, welches eine automatische Waschmaschine (1) und eine Trockenmaschine (21) umfasst, wobei die Waschmaschine einen Waschbehälter (2) und einen ersten Tank (12) umfasst,
wobei die Trockenmaschine eine Trockenkammer (22), einen zweiten Tank (31) und einen Sprüh-Kondensator (27) umfasst, der mit Kondensationswasser vom zweiten Tank (31) beliefert wird, und ein Tablett (30) hat, um die Mischung aus Kondensationswasser und Kondensat zu sammeln,
wobei das System außerdem umfasst:
- eine erste Einrichtung (9, 19, 13, 17, 38, 44, 150, 48, 49), um Wasser vom Behälter (2) zum ersten (12) und zum zweiten (31) Tank zu transportieren, eventuell durch den ersten Tank (12),
- eine zweite Einrichtung (35, 16, 13, 46, 11, 45), um die Mischung aus Kondensationswasser und Kondensat zurückzugewinnen, welche durch das Tablett im ersten (12) Tank, eventuell durch den Behälter (12) gesammelt wird, und
- eine Steuereinrichtung (141) der ersten und der zweiten Einrichtung, die eingerichtet ist, die folgenden Prozessschritte des Systems durchzuführen:
- Sammeln von Spülwasser, welches in der Waschmaschine verwendet wird, im ersten und zweiten Tank,
- Austauschen der Inhalte der Tanks ohne Mischen unter Verwendung des Waschbehälters als einen Puffertank,
- Steuern der Verwendung des Wassers, welches im zweiten Tank (31) als ein Kühlmittel im Sprüh-Kondensator (27) im Laufe einer ersten Trockenstufe verwendet wird,
- Steuern der Verwendung des Wassers, welches im ersten Tank (12) vorhanden ist, welches einmal zum zweiten Tank (31) transportiert wurde, als ein Kühlmittel im Sprüh-Kondensator (27) im Laufe einer zweiten Trocknungsstufe,
- Steuern der Rückgewinnung des Wassers, welches in den Trocknungsstufe verwendet wird, gemischt mit Kondensatwasser, in den Tanks (12, 31) für nachfolgende weitere Verwendung.

9. Verfahren zum Waschen und Trocknen, welches unter Verwendung von zwei separaten Maschinen, einer Waschmaschine (1) bzw. einer Trocknungsmaschine (21) ausgeführt wird, welche miteinander verbunden sind, wobei die Waschmaschine mit einem Waschbehälter (2) und einem ersten Sammeltank (12) versehen ist, wobei die Trocknungsmaschine mit einem zweiten Sammeltank (31) und einem Sprüh-Kondensator (27) versehen ist,
wobei das Verfahren die folgenden Stufen umfasst:
- Rückgewinnung von Spülwasser im ersten (12) und im zweiten Tank (31),
- Beliefern des Sprüh-Kondensators (21) mit Wasser, welches allmählich von dem zweiten Tank (31) gezogen wird und welches als Kondensationswasser verwendet wird, um eine erste Trocknungsstufe zu bewirken, und Transportieren der Mischung aus Kondensationswasser und Kondensat, wenn dies gebildet wird, zum Waschbehälter (2) oder zum folgenden Transport in den Waschbehälter (2) des Wassers, welches anfangs im ersten Tank (12) vorhanden ist, zum ersten Tank (12),
- Transport des Wassers, welches anfangs im ersten Tank (12) vorhanden ist und fallweise zum Behälter (2) zum zweiten Tank (31) übertragen wird,
- Beliefern des Sprüh-Kondensators (27) mit Wasser, welches allmählich vom zweiten Tank (31) gezogen wird und welches als Kondensationswasser verwendet wurde, um eine zweite Trocknungsstufe zu bewirken, und Transportieren der Mischung aus Kondensationswasser und Kondensat, wenn dies gebildet wird, zu entweder dem Waschbehälter (2) oder dem ersten Tank (12),
- Transport des Wassers, welches im Waschbehälter (2) vorhanden ist, zum zweiten Tank (31),
- wobei das Wasser, welches in den Tanks (12, 31) zurückgewonnen wird, für nachfolgende Verwendung als Wasch- und/oder Vorwaschwasser verfügbar ist.

10. Verfahren nach Anspruch 9, wobei die erste Stufe zur Rückgewinnung des Spülwassers zumindest teilweise die erste Trocknungsstufe zeitlich überlappt.

11. Verfahren nach Anspruch 9, wobei die zweite Trocknungsstufe zumindest teilweise zeitlich einen Vorwasch- oder Waschbetrieb überlappt.

## Revendications

1. Machine à laver (1) prévue pour être reliée à un séchoir externe (21) , ladite machine à laver comportant :
- un récipient de lavage (2) et un premier réservoir (12) pour la récupération de l'eau de rinçage,
- des premiers moyens (9,13,14,19,48,149) pour transférer le liquide présent dans le récipient (2) vers le premier réservoir (12) et inversement,
- des seconds moyens (9,13,17,19,35,44,45,46,48,49,150) pour transférer le liquide de la machine à laver (1) vers le séchoir externe (21) et inversement,
- une unité de contrôle (141) pour commander les premiers moyens (9,13,14,19,48,149), les seconds moyens (9,13,17,19,35,44,45,46,48,49, 150) et le séchoir externe (21),
**caractérisé en ce que** lesdits seconds moyens comportent au moins l'un des éléments suivants :
- des troisièmes moyens (9,19,17,44,150) pour le transfert direct de liquide du récipient (2) vers le séchoir externe (21) sans transiter par le premier réservoir (12) et / ou
- des quatrièmes moyens (11,17,45) pour le transfert direct de liquide du séchoir externe (21) vers le récipient (2) sans transiter par le premier réservoir.

2. Machine à laver (1) selon la revendication 1 comportant deux raccordements séparés pour l'évacuation et l'admission de liquide, respectivement de et vers le séchoir (21) .

3. Machine à laver selon la revendication 2 selon laquelle lesdits raccordements sont du même type que pour le raccordement de conduits hydrauliques (42,43) se terminant par une prise à fixation rapide.

4. Machine à laver selon l'une des revendications précédentes dans laquelle le premier réservoir (12) est disposé en dessous du récipient (2) et la machine comporte une porte de chargement supérieure (147).

5. Séchoir (21) prévu pour être relié à une machine à laver et comportant une chambre de séchage (22), un réservoir (31) pour l'accumulation de l'eau de refroidissement, un condensateur de vapeur (27) alimenté à partir dudit réservoir (31), un tiroir (30) pour récupérer le mélange de l'eau de condensation et des condensats, une entrée (18,42) pour recevoir l'eau de la machine à laver (1) à récupérer dans le réservoir (31) et des moyens (39) pour réceptionner les signaux de contrôle à partir de la machine à laver (1), **caractérisé en ce qu'**il comporte également :
- des moyens (35,18,43) comportant une première pompe (35) contrôlée par lesdits signaux de contrôle et une évacuation d'eau (18,43) pour transférer directement le mélange collecté dans le tiroir de récupération (30) vers la machine à laver (1), sans transiter par le réservoir (31), ladite entrée (18,42) et ladite évacuation (18,43) étant les seuls raccordements hydrauliques du séchoir vers l'extérieur .

6. Séchoir selon la revendication 5 comportant deux conduits hydrauliques séparés (42,43) avec un fourreau de protection simple et isolé thermiquement l'un par rapport à l'autre, respectivement pour l'évacuation et l'alimentation en liquide à partir de et vers la machine à laver.

7. Séchoir selon la revendication 5 ou la revendication 6 dans lequel la machine est du type à chargement par le haut et le réservoir de récupération (31) est situé en dessous de la chambre de séchage (22) et le condensateur de vapeur (27), et ladite machine comportant par ailleurs :
- une deuxième pompe (50) délivrant de l'eau de refroidissement à partir du réservoir (31) vers le condensateur de vapeur (27) et,
- des moyens (51,151) commandés par lesdits signaux de contrôle pour connecter sélectivement l'alimentation de la première pompe (35) au tiroir de récupération (30) ou à une évacuation du réservoir (31).

8. Machine à laver domestique avec séchoir comportant une machine à laver automatique (1) et un séchoir (21), ladite machine à laver comportant un récipient de lavage (2) et un premier réservoir (12),
ledit séchoir comportant une chambre de séchage (22), un deuxième réservoir (31) et un condensateur de vapeur (27) alimenté par l'eau de condensation du dit deuxième réservoir (31) et comportant un tiroir (30) pour la récupération du mélange de l'eau de condensation et des condensats, ledit système comportant par ailleurs :
- des premiers moyens (9,19,13,17,38,44,150,48,49) pour transférer l'eau à partir dudit récipient (2) vers lesdits premiers et seconds réservoirs (12) et (31) éventuellement à travers le premier réservoir (12),
- des seconds moyens (35,16,13,46,11,45) pour récupérer le mélange de l'eau de condensation et des condensats qui sont collectés par ledit tiroir (30) dans le premier réservoir (12) éventuellement à travers ledit récipient (2) et
- des moyens de commande (141) desdits premiers et seconds moyens conçus pour réaliser les étapes suivantes, au sein du système :
- l'accumulation de l'eau de rinçage utilisée dans la machine à laver, dans lesdits premiers et seconds réservoirs,
- l'échange des contenus desdits réservoirs sans mélange en utilisant le récipient de lavage en tant que réservoir tampon,
- l'utilisation de l'eau présente dans ledit second réservoir (31) en tant que refroidissant le condensateur de vapeur (27) pendant un premier cycle de séchage,
- l'utilisation de l'eau présente dans ledit réservoir (12), une fois transférée vers le second réservoir (31) en tant que refroidissant dans ledit condensateur de vapeur (27) lors d'un second cycle de séchage,
- la récupération de l'eau utilisée au cours des cycles de séchage, mélangée avec l'eau de condensation, à l'intérieur desdits réservoirs (12,31) en vue d'une utilisation ultérieure.

9. Méthode pour laver et sécher mise ne oeuvre en utilisant deux machines séparées, une machine à laver (1) et un séchoir (21), reliées l'une à l'autre, la machine à laver comportant un récipient de lavage (2) et un premier réservoir de récupération (12), le séchoir comportant un deuxième réservoir de récupération (31) et un condensateur de vapeur (27),
cette méthode comportant les étapes suivantes :
- la récupération de l'eau de rinçage dans lesdits premier et second réservoir (12, 31),
- l'alimentation du condensateur de vapeur (27) avec l'eau qui est progressivement extraite du deuxième réservoir et utilisée comme eau de condensation pour effectuer un premier cycle de séchage, et le transfert du mélange de l'eau de condensation et des condensats qui en résultent vers le récipient de lavage (2) ou, suite au transfert dans le récipient de lavage (2) de l'eau qui était initialement présente dans la réservoir (12), vers le premier réservoir (12),
- le transfert de l'eau initialement présente dans ledit premier réservoir (12) et le cas échéant transférée vers le récipient (2), vers le second réservoir (31),
- l'alimentation du condensateur de vapeur (27) avec l'eau qui est progressivement extraite du deuxième réservoir (31) et utilisée comme eau de condensation pour effectuer un second cycle de séchage et transférer le mélange de l'eau de condensation et des condensats qui en résultent vers, soit le récipient de lavage (2) ou le premier réservoir (12),
- le transfert de l'eau présente dans le récipient de lavage (2) vers le second réservoir (31),
- 'eau récupérée dans lesdits réservoirs (12,31) étant disponible pour une utilisation ultérieure en vue d'un lavage et/ou d'un prélavage.

10. Méthode selon la revendication 9 dans laquelle le premier cycle de récupération de l'eau de rinçage chevauche partiellement le premier cycle de séchage.

11. Méthode selon la revendication 9 dans laquelle le deuxième cycle de séchage chevauche partiellement le cycle de prélavage ou de lavage.
